# EUROPÄISCHE PATENTSCHRIFT

(11) **EP 1 268 348 B1**
(45) Veröffentlichungstag und Bekanntmachung des Hinweises auf die Patenterteilung: **29.12.2004**
(21) Anmeldenummer: 01927630.2
(22) Anmeldetag: 30.03.2001
(51) Int. Cl.: C02F 1/00, B01D 35/143, G01F 23/00

(54) **VERFAHREN ZUR BESTIMMUNG DES WIRKUNGSGRADES EINER FLÜSSIGKEITSBEHANDLUNGSEINHEIT UND DIESES VERFAHREN NUTZENDE VORRICHTUNG**
METHOD FOR DETERMINING THE EFFICIENCY OF A LIQUID PROCESSING UNIT AND DEVICE USING SAID METHOD
PROCEDE DE DETERMINATION DE L'EFFICACITE D'UNE UNITE DE TRAITEMENT DE LIQUIDE, ET DISPOSITIF FONCTIONNANT SELON CE PROCEDE

(30) Priorität: 30.03.2000 DE 10015764
(43) Veröffentlichungstag der Anmeldung: 02.01.2003
(73) Patentinhaber: Brita GmbH, 65232 Taunusstein (DE)
(72) Erfinder: LORENZ, Andy, 89601 Schelklingen (DE); HOFMANN, Uwe, 65321 Heidenrod (DE); HANKAMMER, Markus, 65193 Wiesbaden (DE); WALDE, Hilmar, 36396 Steinau a.d. Strasse (DE)
(74) Vertreter: Weber-Bruls, Dorothée, Dr.
(86) Internationale Anmeldenummer: PCT/DE2001/001225
(87) Internationale Veröffentlichungsnummer: WO 2001/074719

(56) Entgegenhaltungen:
- EP-A- 0 891 952
- DE-A- 4 042 257
- DE-A- 19 726 044
- DE-A- 19 816 455
- DE-U- 7 908 816
- GB-A- 2 257 429
- US-A- 5 328 597

## Beschreibung

Die Erfindung betrifft eine Vorrichtung zur Bestimmung des Wirkungsgrades einer Flüssigkeitbehandlungseinheit nach dem Oberbegriff von Anspruch 1.

Flüssigkeitsbehandlungseinheiten zum Aufbereiten von Flüssigkeiten, wie z.B. Wasserreinigungskartuschen, die ein Reinigungsmittel beherbergen, sollten regelmäßig ausgetauscht werden. Dabei sollte einerseits ein der Erfüllung der Aufbereitungsfunktion entgegenstehender Erschöpfungszustand beispielsweise des Reinigungsmittels, der nach Durchsatz eines gewissen Flüssigkeitsvolumens erreicht ist, und andererseits ein hygienisch bedenklicher Verunreinigungszustand beispielsweise des Reinigungsmittels, der nach einem bestimmten Zeitraum nach Entnahme aus einer sterilen Verpackung unter anderem aufgrund von Keimbildung auftritt, berücksichtigt werden. Daher sind die Herstellerfirmen solcher Flüssigkeitsbehandlungseinheiten bestrebt, dem Verbraucher einen Indikator an die Hand zu geben, der den augenblicklichen Zustand bzw. Wirkungsgrad und den Zeitpunkt, an dem es ratsam ist, die Flüssigkeitsbehandlungseinheit auszuwechseln, anzeigt.

Eine gattungsgemäße Vorrichtung ist aus der DE 197 31 092 A1 sowie der dazu parallelen EP 0 891 952 A1 bekannt. Dieser bekannten Vorrichtung wird die Annahme zugrunde gelegt, daß ein Behälter im Durchschnitt mit der gleichen Menge an aufzubereitender Flüssigkeit befüllt wird, so daß die Menge der durch die Flüssigkeitsbehandlungseinheit gelaufenen Flüssigkeit durch Aufsummierung der Anzahl der Befüllungsvorgänge des Behälters abgeschätzt werden kann. Dabei wird ferner angenommen, daß ein Befüllungsvorgang durch Öffnen und Schließen eines Deckels des Behälters bestimmbar ist. Diese Annahmen führen jedoch zu erheblichen Ungenauigkeiten bei der Bestimmung der Menge der durch die Flüssigkeitsbehandlungseinheit gelaufenen Flüssigkeit, so daß die entsprechende Auswertung mangelhaft ist.

Der GB 2 257 429 A ist ebenfalls eine Vorrichtung zur Bestimmung des Wirkungsgrades einer Flüssigkeitsbehandlungseinheit in Abhängigkeit von der Menge gereinigter Flüssigkeit und der Zeit bekannt. Dabei wird die zu behandelnde Flüssigkeit gegen ihre Schwerkraft, von unten nach oben, durch die Flüssigkeitsbehandlungseinheit gepumpt und die Dauer der Pumpenaktivität zur Erfassung der Menge an gereinigter Flüssigkeit herangezogen. Aufgrund des Durchfließens der Flüssigkeitsbehandlungseinheit von unten nach oben ist der dort offenbarte Aufbau äußerst und kompliziert und störanfällig.

Aus der US 5,328,597 ist eine Überwachungseinheit zum Anbringen an eine Flüssigkeitsbehandlungseinheit bekannt. Über die Anzahl von Kurzschlüssen zwischen zwei Kontakten wird dabei die Menge der durch die Flüssigkeitsbehandlungseinheit gelaufenen Flüssigkeit wieder lediglich grob abgeschätzt, und über die zwischen zwei Kontakten gemessene Fließrate wird der Verschmutzungsgrad der Flüssigkeitsbehandlungseinheit bestimmt.

Es sind auch Überwachungssysteme für Flüssigkeitsfilter in Flüssigkeitsleitungen bekannt, bei denen die Zeit eines Wasserdurchflusses sowie die Einbauzeit eines Filters zur Bestimmung eines Wirkungsgrades des Filters herangezogen werden. Hier ist insbesondere auf die US 5,089,144 zu verweisen.

Ferner sind zahlreiche Flüssigkeitsstandanzeiger im Stand der Technik bekannt. So ist, beispielsweise, aus der DE 79 08 816 U 1 eine Fühlerelektrodenanordnung in Verbindung mit Spannungsinvertern, Widerständen und einer Spannungsquelle bekannt, bei der jeder der Spannungsinverter ein Signal liefert, wenn der Stromkreis zwischen der damit verbundenen Fühlerelektrode und einer Masseelektrode durch in einem Behälter enthaltenen Flüssigkeit geschlossen wird. Aus der DE 40 42 257 A1 ist hingegen die Anordnung einer Vielzahl von Elektroden sowie einer Gegenelektrode zur Erfassung von Widerstandsänderungen oder Potentialänderungen zwecks Bestimmung einer Füllstandshöhe in einem Behälter bekannt. Auch ist die Erfassung einer Füllstandshöhe über Kapazitätsänderungen im Stand der Technik bekannt, siehe beispielsweise die DE 198 16 455 A1. Weiterhin ist die Messung von Frequenzänderungen zur Bestimmung von Füllstandshöhen in Behältern durch Einsatz eines mit einer galvanischen Zelle vergleichbaren Akkumulators im Stand der Technik beschrieben, vergleiche DE 43 12 432 A1. Den bekannten Flüssigkeitsstandanzeigern ist jedoch gemein, daß sie lediglich Informationen über den Flüssigkeitsstand ausgeben, ohne diese Information zum Erstellen von Warnhinweisen an Benutzer direkt zu verarbeiten. In diesem Zusammenhang ist auf die DE 197 26 044 A1 hinzuweisen, die einen Flüssigkeitsstandanzeiger für ein Pflanzgefäß offenbart, der optische und/oder akustische Signale als Gießhilfen für einen Benutzer ausgibt.

Der Erfindung liegt somit die Aufgabe zugrunde, die gattungsgemäße Vorrichtung derart weiterzuentwickeln, daß die Nachteile des Stands der Technik überwunden werden, insbesondere sowohl ein Flüssigkeitsdurchsatz durch eine Flüssigkeitbehandlungseinheit als auch eine Einbauzeit der Flüssigkeitsbehandlungseinheit zur Bestimmung des Wirkungsgrades der Flüssigkeitsbehandlungseinheit mit höherer Genauigkeit bei einfacherem Aufbau gegenüber dem Stand der Technik erfaßt werden. Die erfindungsgemäße Vorrichtung soll auch ein einfaches Nachrüsten bereits genutzter Auffangkannen ermöglichen.

Diese Aufgabe wird gelöst durch die Merkmale des Kennzeichens von Anspruch 1.

Bevorzugte Ausführungsformen der erfindungsgemäßen Vorrichtung sind in den Ansprüchen 2 bis 28 beschrieben.

Der Erfindung liegt somit die Erkenntnis zugrunde, daß der Erschöpfungsgrad einer Flüssigkeitsbehandlungseinheit durch Bestimmung der Menge an durch die Flüssigkeitsbehandlungseinheit gelaufener Flüssigkeit über zumindest drei diskrete Flüssigkeitsvolumina innerhalb eines die Flüssigkeit zumindest zeitweise aufnehmenden Behälters und der Verschmutzungsgrad der Flüssigkeitsbehandlungseinheit durch Messen der Zeit des Einbaus der Flüssigkeitsbehandlungseinheit in oder an dem Behälter bei der Erstellung von Anweisungen an einen Verbraucher, insbesondere zum Wechseln der Flüssigkeitsbehandlungseinheit berücksichtigt werden. Ferner liefert die Erfindung eine für den Verbraucher kostengünstige Vorrichtung, die eine konkrete Hilfe bei der Nutzung von Flüssigkeitsbehandlungseinheiten darstellt.

Weitere Merkmale und Vorteile der Erfindung ergeben sich aus der nachfolgenden Beschreibung, in der Ausführungsbeispiele der Erfindung anhand von schematischen Zeichnungen im Einzelnen erläutert werden. Dabei zeigt:
- Figur 1: eine perspektivische Seitenansicht eines erfindungsgemäßen Wasser-Meß-Stabes, von schräg unten,
- Figur 2a: eine Vorderansicht des erfindungsgemäßen Wasser-Meß-Stabes von Figur 1,
- Figur 2b: eine Vorderansicht von Leiterbahnen, inklusive Kontakte und eines Quersteges, des Wasser-Meß-Stabes von Figur 1,
- Figur 3a: eine Explosionsansicht des oberen Teils des Wasser-Meß-Stabes von Figur 1,
- Figur 3b: eine Draufsicht des Wasser-Meß-Stabes von Figur 1, von oben,
- Figur 4a: eine Vorderteilschnittansicht einer zweiten erfindungsgemäßen Ausführungsform in Form eines Wasser-Meß-Stabes und einer Flüssigkeitsbehandlungseinheit, und
- Figur 4b: eine Vorderteilschnittansicht des Wasser-Meß-Stabes von Figur 4a, auf eine Flüssigkeitsbehandlungseinheit aufmontiert.

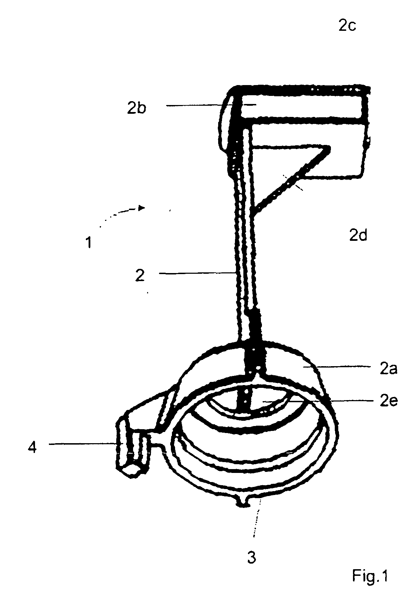

Wie Figur 1 zu entnehmen ist, umfaßt ein Wasser-Meß-Stab 1 nach der Erfindung eine Halterung 2, die ihrerseits ein Verbindungsglied 2a für eine nicht dargestellte Flüssigkeitsbehandlungseinheit und ein Gehäuse 2b für eine nicht dargestellte Auswerteeinheit und mit einer Gehäuseoberseite 2c für eine nicht dargestellte Anzeigeeinrichtung aufweist. Das Gehäuse 2b der Halterung 2 erfährt eine Versteifung durch ein Verstärkungsglied 2d. Das Verbindungsglied 2a läßt eine Belüftungsöffnung 2e für die Flüssigkeitsbehandlungseinheit frei, beherbergt eine der Verbindung mit der Flüssigkeitsbehandlungseinheit dienende Nut 3 und besitzt an seinem äußersten Ende eine Rastnase 4 zur Gewährleistung einer Verdrehsicherung innerhalb einer nicht gezeigten Auffangkanne.

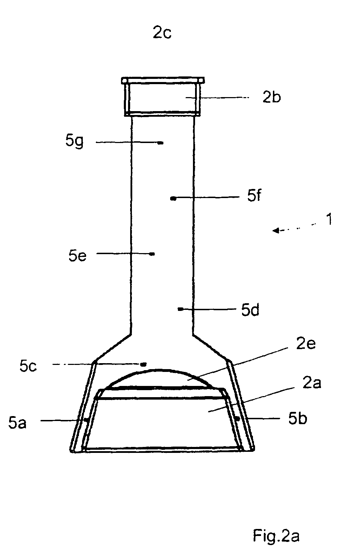

In Figur 2a sind Kontakte 5a - 5g dargestellt, von denen ein erster Kontakt 5a einen Massekontakt darstellt und die weiteren Kontakte 5b - 5g in diskreten Abständen zueinander entlang der Halterung 2 angeordnet sind. Leiterbahnen verlaufen von den Kontakten 5a - 5g innerhalb der Halterung 2 zur Auswerteeinheit. Die Auswerteeinheit umfaßt eine Meßplatine, eine Energiequelle, z. B. eine Batterie, sowie eine elektronische Uhr, und ist mit einer Reseteinrichtung 9 und der Anzeigeeinrichtung 10 verbunden.

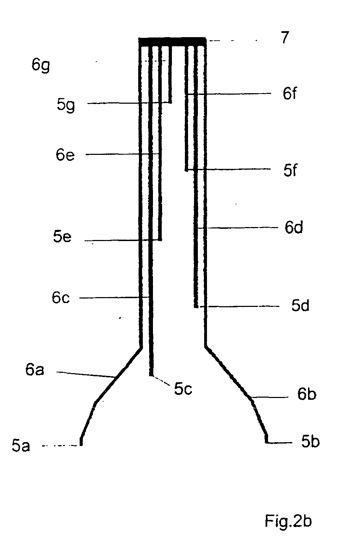

Das Geäst der Leiterbahnen 6a - 6g, das den Massekontakt 5a und die weiteren Kontakte 5b - 5g mit der Auswerteeinheit verbindet, ist in Figur 2b veranschaulicht.

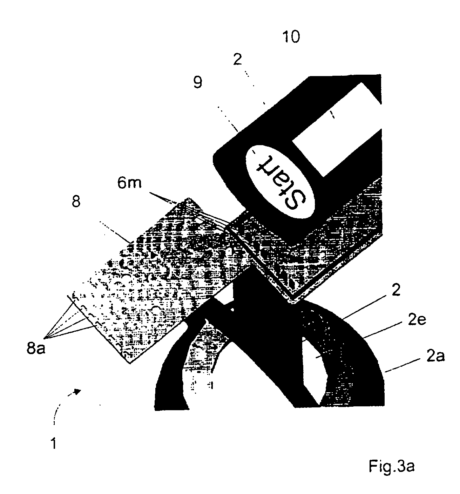

Figur 3a zeigt den Wasser-Meß-Stab mit zerlegtem Gehäuse 2b und der Auswerteeinheit, symbolisiert durch die Platine 8. Fabrikationstechnisch ist vorgesehen, die Leiterbahnen 6a - 6g mit den Kontakten 5a - 5g als ein Werkstück zu fertigen, wobei die Leiterbahnen 6a - 6g durch einen Quersteg 7 an den den Kontakten 5a - 5g gegenüberliegenden Leiterbahnenden 6m miteinander verbunden sind. Dieses Geäst wird dann in eine Spritzgußform für die Halterung 2 eingelegt. Nach einem Gießvorgang sollen lediglich die Kontakte 5a - 5g und der Quersteg 7 mit einer speziell bemaßten Länge der Leiterbahnenden 6m nicht vom Gießmaterial ummantelt sein. Nachdem die Leiterbahnen 5a - 5g in der Halterung 2 durch den Gießvorgang fixiert sind, wird der Quersteg 7 entfernt. Die übrig gebliebenen, speziell bemaßten Leiterbahnenden 6m dienen nun wiederum als Fixierungseinrichtung für die Platine 8 der Auswerteeinheit, indem sie durch Aussparungen 8a in der Platine 8 hindurchgesteckt werden. Abschließend wird das Gehäuse 2b durch die Gehäuseoberseite 2c verschlossen. Auf der Gehäuseoberseite 2b befindet sich die Anzeigeeinrichtung 10 und die Reseteinrichtung 9.

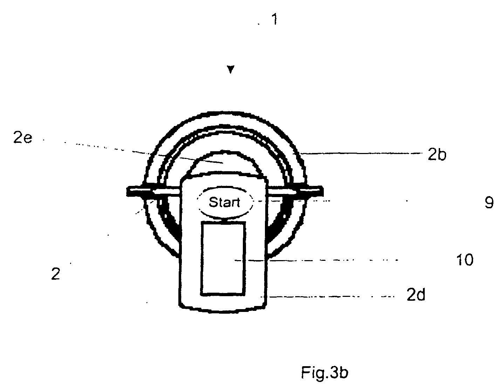

Figur 3b zeigt noch einmal den Wasser-Meß-Stab zusammengesetzt im Gehäuse 2b.

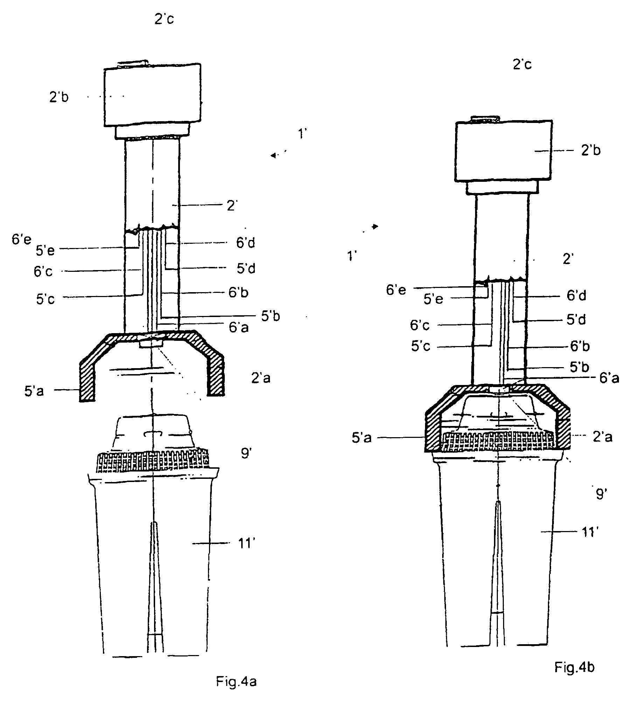

In den Figuren 4a und 4b wird eine andere Ausführungsform eines Wasser-Meß-Stabes 1' nach der Erfindung vorgestellt. Der Wasser-Meß-Stab 1' umfaßt wieder eine Halterung 2' mit einem schaftartigen Mittelteil, einem Verbindungsglied 2'a für eine Flüssigkeitsbehandlungseinheit 11' an einem Ende und ein Gehäuse 2'b für eine nicht gezeigte Auswerteeinheit mit einer Gehäuseoberseite 2'c für eine nicht gezeigte Anzeigeeinrichtung und eine nicht gezeigte Reseteinrichtung an dem anderen Ende. Von der Auswerteeinheit zu mit Flüssigkeit benetzbaren Kontakten 5'a - 5'e erstrecken sich im schaftartigen Mittelteil der Halterung 2' Leiterbahnen 6'a - 6'e. Die Anzahl der Kontakte 5'a - 5'e entspricht der der vorherigen Ausführungsform, wobei jedoch bedingt durch den Zeichnungsschnitt neben dem Massekontakt 5'a nur die Kontakte 5'b - 5'e samt Leiterbahnen 6'a - 6'e zu sehen sind. Zudem weist die Ausführungsform der Figuren 4a und 4b eine zusätzliche Reseteinrichtung 9' im Verbindungsglied 2'a auf.

Die Figuren 4a und 4b veranschaulichen das Aufsetzen des Wasser-Meß-Stabes 1' auf die Flüssigkeitsbehandlungseinheit 11' zur Justage in einem nicht dargestellten Behälter, wobei in dem in Figur 4a dargestellten Zustand vor dem Aufsetzen des Wasser-Meß-Stabes 1' auf die Flüssigkeitsbehandlungseinheit 11' die Reseteinrichtung 9' geöffnet und in dem in Figur 4b dargestellten Zustand nach dem Aufsetzen des Wasser-Meß-Stabes 1' auf die Flüssigkeitsbehandlungseinheit 11' die Reseteinrichtung 9' geschlossen ist.

Im Betrieb wird der Wasser-Meß-Stab 1 der Figuren 1 bis 3b mit dem Verbindungsglied 2a über die Nut 3 fest auf eine Flüssigkeitsbehandlungseinheit aufgesetzt und in einen als Trichter für die Flüssigkeitsbehandlungseinheit fungierenden, mit aufzubereitender Flüssigkeit zu befüllenden und nicht gezeigten Behälter installiert, der wiederum in einer nicht gezeigten Auffangkanne für aufbereitete Flüssigkeit plaziert ist, wobei die Rastnase 4 die korrekte Justage der Flüssigkeitsbehandlungseinheit in dem Behälter sowie in der Auffangkanne gewährleistet. Es erfolgt eine Aktivierung der Auswerteeinheit, einschließlich der Uhr, durch manuelles Betätigen der Reseteinrichtung 9. Wird nun eine gewisse Menge an Flüssigkeit, z. B. Leitungswasser, in den Behälter gefüllt, so schließt das Leitungswasser aufgrund seiner elektrolytischen Eigenschaften benetzte Kontakte, z. B. die Kontakte 5a und 5b, kurz. Die im Gehäuse 2b befindliche kalibrierte Auswerteeinheit registriert das in den Behälter eingefüllte Flüssigkeitsvolumen. Das Flüssigkeitsniveau senkt sich nun in dem Behälter ab, da die Flüssigkeit von der Schwerkraft getrieben durch die Flüssigkeitsbehandlungseinheit in die Auffangkanne abläuft. Fällt das Flüssigkeitsniveau dabei unter die Kontakte 5a und 5b ab, so wird der Kurzschluß dazwischen wieder geöffnet. Gleichgültig ob die zuvor eingefüllte Flüssigkeitsmenge vollständig abgelaufen ist, oder sich ein eventueller Rest noch im Behälter befindet, bei einem erneuten Nachfüllen von Flüssigkeit registriert die Auswerteeinheit das hinzugefügte Flüssigkeitsvolumen, sofern die hinzugefügte Flüssigkeit einen Kontakt zusätzlich zum Massekontakt 5a benetzt und somit mit dem Massekontakt kurzschließt. Reicht die eingefüllte Flüssigkeitsmenge nicht aus, einen Kurzschluß des Massekontaktes mit einem weiteren Kontakt herzustellen, so erfolgt keine Aufsummierung in der Auswerteeinheit. Um einen Bezug zwischen der Einbauzeit und der durchgelaufenen Flüssigkeitsmenge herzustellen, werden beide Größen auf zuvor festgelegte Maximalwerte, wie beispielsweise 100 Liter und 30 Tage, bezogen bzw. von denselben heruntergerechnet, und die somit erhaltenen prozentualen Werte bzw. Prozentsätze miteinander verglichen. Der jeweils niedrigere Prozentsatz wird dann auf der Anzeigeeinrichtung angezeigt, beispielsweise in 25%-Schritten. Erreicht einer der Prozentsätze die 0 %-Grenze, also den entsprechenden Maximalwert, gilt die Flüssigkeitsbehandlungseinheit als erschöpft und/oder verunreinigt, so daß sie ausgewechselt werden sollte. Beim Entnehmen der auszuwechselnden Flüssigkeitsbehandlungseinheit dient nun der Wasser-Meß-Stab als Demontagehilfe. Die Flüssigkeitsbehandlungseinheit kann außerhalb des Behälters ausgewechselt werden, und der Kontrollmechanismus zur Bestimmung des Wirkungsgrads der neuen Flüssigkeitsbehandlungseinheit kann durch das Betätigen der Reseteinrichtung 9 unter Setzung der beiden Prozentsätze auf 100 % wieder aktiviert werden.

Die in der vorstehenden Beschreibung, in den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1, 1': Wasser-Meß-Stab
- 2, 2': Halterung
- 2a, 2'a: Verbindungsglied
- 2b, 2'b: Gehäuse
- 2c, 2'c: Gehäuseoberseite
- 2d: Verstärkungsglied
- 2e: Belüftungsöffnung
- 3: Nut
- 4: Rastnase
- 5a, 5'a: Massekontakt
- 5b-5g; 5'b-5'e: Kontakt
- 6a-6g; 6'a-6'e: Leiterbahn
- 6m: Leiterbahnende
- 7: Quersteg
- 8: Platine
- 8a: Aussparung
- 9,9': Reseteinrichtung
- 10: Anzeigeeinrichtung
- 11': Flüssigkeitsbehandlungseinheit

## Patentansprüche

1. Vorrichtung zur Bestimmung des Wirkungsgrades einer Flüssigkeitsbehandlungseinheit für einen eine Flüssigkeit zumindest zeitweise aufnehmenden Behälter, der einen Trichter zu der Flüssigkeitsbehandlungseinheit darstellt und in einer Auffangkanne plaziert ist, in Abhängigkeit von der Menge der durch die Flüssigkeitsbehandlungseinheit gelaufenen Flüssigkeit und von der Zeit des Einbaus der Flüssigkeitsbehandlungseinheit in oder an dem Behälter, wobei eine maximale Flüssigkeitsmenge sowie eine maximale Einbauzeit bestimmbar sind, die Menge der durch die Flüssigkeitsbehandlungseinheit durchgelaufenen Flüssigkeit in Form eines ersten Prozentsatzes von 100% bis zu der auf 0% gesetzten maximalen Flüssigkeitsmenge sowie der Zeit des Einbaus der Flüssigkeitsbehandlungseinheit in oder an dem Behälter in Form eines zweiten Prozentsatzes von 100% bis zu der auf 0% gesetzten maximalen Einbauzeit bestimmbar sind und als Ergebnis eines Vergleichs des ersten Prozentsatzes mit dem zweiten Prozentsatz der niedrigere Prozentsatz derselben anzeigbar ist, **gekennzeichnet durch**
eine Halterung (2, 2'),
die mindestens vier separate Kontakte (5a - 5g; 5'a - 5'e) trägt, von denen zumindest drei Kontakte (5b - 5g; 5'b - 5'e) übereinander in der Vorrichtung und/oder vertikal in dem Behälter, von der Flüssigkeit benetzbar, angeordnet sind und die jeweils über eine Leiterbahn (6a - 6g; 6'a - 6'e) mit einem Eingang einer Auswerteeinheit elektrisch verbindbar sind,
die mit der Flüssigkeitsbehandlungseinheit (11, 11') und/oder dem Behälter und/oder der Auffangkanne lösbar verbindbar ist, und
die die Auswerteeinheit in Wirkverbindung mit einer Energiequelle und einer Anzeigevorrichtung (10) abstützt, wobei
zur Bestimmung der Menge der **durch** die Flüssigkeitsbehandlungseinheit (11, 11') durchgelaufenen Flüssigkeit über die Kontakte (5a - 5g; 5'a - 5'e) in Verbindung mit der Auswerteeinheit zwischen mindestens drei erfaßbaren Füllvolumina des Behälters unterscheidbar sowie erfaßte Füllvolumina aufsummierbar sind, und über die Anzeigevorrichtung (10) der niedrigere Prozentsatz anzeigbar ist.

2. Vorrichtung nach Anspruch 1, **dadurch gekennzeichnet, daß**
die Auswerteeinheit zur Mittelung der erfaßten Füllvolumina über eine bestimmte Zeitdauer ausgeführt ist.

3. Vorrichtung nach Anspruch 1 oder 2, **dadurch gekennzeichnet, daß**
der Behälter zum Ausgießen von aufbereiteter Flüssigkeit aus der Auffangkanne um eine Schwenkachse verschwenkbar ist, und jeder Kontakt (5a - 5g; 5'a - 5'e) im Wesentlichen parallel zu und/oder in der Nähe der Schwenkachse angeordnet ist und/oder in einer die Schwenkachse enthaltenden Ebene liegt.

4. Vorrichtung nach einem der vorangehenden Ansprüche, **dadurch gekennzeichnet, daß**
die Kontakte (5a - 5g; 5'a -5'e) zumindest teilweise unter Zwischenschaltung mindestens eines Widerstands und/oder Spannungsinverters mit der Auswerteeinheit verbindbar sind:

5. Vorrichtung nach einem der vorangehenden Ansprüche, **dadurch gekennzeichnet, daß**
jeder Kontakt (5a - 5g; 5'a - 5'e) in Form eines zumindest einmal umgebogenen und/oder freien Endes einer Leiterbahn (6a - 6g; 6'a - 6'e) ausgebildet ist.

6. Vorrichtung nach einem der vorangehenden Ansprüche, **dadurch gekennzeichnet, daß**
die Leiterbahnen (6a - 6g; 6'a - 6'e) zumindest teilweise in der Halterung (2) eingebettet sind, auf die Halterung aufgedruckt oder aufgebracht sind, oder in der Halterung (2') verlaufen.

7. Vorrichtung nach einem der vorangehenden Ansprüche, **dadurch gekennzeichnet, daß**
zumindest eine Leiterbahn (6a - 6g; 6'a - 6'e) ein abgeknöpftes Ende aufweist.

8. Vorrichtung nach einem der vorangehenden Ansprüche, **dadurch gekennzeichnet, daß**
ein erster Kontakt (5a; 5'a), der am tiefsten in dem Behälter plaziert ist, als Massekontakt fungiert, und die Füllvolumina über diskrete, durch Anordnung der weiteren Kontakte (5b - 5g; 5'b - 5'e) bestimmte Füllhöhen in dem Behälter erfaßbar sind.

9. Vorrichtung nach Anspruch 8, **dadurch gekennzeichnet, daß**
jede Füllhöhe dem Sitz eines weiteren Kontakts (5b - 5g; 5'b - 5'e) entspricht oder zwischen zwei benachbarten Kontakten (5b - 5g; 5'b - 5'e) definiert ist.

10. Vorrichtung nach einem der vorangehenden Ansprüche, **dadurch gekennzeichnet, daß**
die Füllvolumina des Behälters jeweils durch Kurzschließen von Kontakten und/oder durch Verändern der Kapazität einer sich vertikal in dem Behälter erstreckenden Kondensatoranordnung und/oder durch Verändern des Widerstands einer sich vertikal im Behälter erstreckenden Widerstandsanordnung und/oder durch Verändern der Frequenz eines Oszillators, der mit zwei getrennt voneinander sich in vertikaler Richtung in einem Behälter erstreckenden Elektroden verbunden ist, wobei die Elektroden und die Flüssigkeit als galvanische Zelle fungieren, durch die Flüssigkeit bestimmbar sind.

11. Vorrichtung nach einem der vorangehenden Ansprüche, **dadurch gekennzeichnet, daß**
die Menge der durch die Flüssigkeitsbehandlungseinheit (11, 11') gelaufenen Flüssigkeit in Abhängigkeit von der Neigung des Behälters bestimmbar ist.

12. Vorrichtung nach Anspruch 11, **dadurch gekennzeichnet, daß**
die Auswerteeinheit nur in im wesentlichen aufrechter Stellung des Behälters zur Bestimmung von Füllvolumina aktiv ist.

13. Vorrichtung nach einem der vorangehenden Ansprüche, **dadurch gekennzeichnet, daß**
die Anzeigeeinrichtung in Form zumindest einer LCD- oder LED-Anzeige (10) und/oder zumindest eines Lautsprechers ausgebildet ist und/oder den Wirkungsgrad in mindestens vier Schritten optisch, wie mittels alphanummerischer Zeichen und/oder einer Balkenanzeige, und/oder akustisch, wie mittels Signaltönen oder Sprachnachrichten, angezeigt.

14. Vorrichtung nach einem der vorangehenden Ansprüche, **dadurch gekennzeichnet, daß**
eine elektronische Uhr und/oder eine Reseteinrichtung (9) für den ersten und zweiten Prozentsatz jeweils in Wirkverbindung mit der Auswerteeinheit steht bzw. stehen oder in dieselbe integriert ist bzw. sind.

15. Vorrichtung nach einem der vorangehenden Ansprüche, **dadurch gekennzeichnet, daß**
zumindest eine der Leiterbahnen (6a - 6g; 6'a - 6'e) an ihrem dem dazugehörigen Kontakt (5a - 5g; 5'a - 5'e) abgewandte Ende Teil einer Fixierungseinrichtung für zumindest eine Platine (8) ist, und/oder
die Platine (8) Bestandteil der Auswerteeinheit und/oder Energiequelle ist.

16. Vorrichtung nach einem der vorangehenden Ansprüche, **dadurch gekennzeichnet, daß**
die Halterung (2) über eine Nut (3) und/oder eine Rastnase (4) und/oder verdrehsicher mit der Flüssigkeitsbehandlungseinheit (11, 11 ') und/oder dem Behälter und/oder der Auffangkannen verbunden ist.

17. Vorrichtung nach einem der vorangehenden Ansprüche, **dadurch gekennzeichnet, daß**
über die Halterung (2, 2') die Flüssigkeitsbehandlungseinheit (11, 11') aus der Auffangkanne entfernbar bzw. in die Auffangkanne plazierbar ist.

18. Vorrichtung nach einem der vorangehenden Ansprüche, **dadurch gekennzeichnet, daß**
der erste und der zweite Prozentsatz auf 100 % zurücksetzbar sind durch Einbau einer neuen Flüssigkeitsbehandlungseinheit in oder an dem Behälter.

19. Vorrichtung nach einem der vorangehenden Ansprüche, **dadurch gekennzeichnet, daß**
die Halterung (2, 2') zumindest bereichsweise flach ausgebildet ist und/oder zur Abstützung der Auswerteeinheit ein Verstärkungsglied (2d) umfaßt und/oder zur Verbindung mit der Flüssigkeitsbehandlungseinheit (11, 11') ein Verbindungsglied (2a; 2'a) aufweist und/oder eine Belüftungsöffnung (2e) für die Flüssigkeitsbehandlungseinheit (11, 11') aufweist.

20. Vorrichtung nach Anspruch 19, **dadurch gekennzeichnet, daß**
der glatte Bereich der Halterung (2) in der Mitte, das Verstärkungsglied (2d) am oberen Ende und das Verbindungsglied (2a, 2'a) am unteren Ende der Halterung (2) angeordnet sind.

21. Vorrichtung nach Anspruch 19 oder 20, **dadurch gekennzeichnet, daß**
das Verstärkungsglied (2d) als Rippe und/oder das Verbindungsglied (2a, 2'a) als Kragen oder geöffnete Kuppel ausgebildet ist bzw. ist.

22. Vorrichtung nach einem der vorangehenden Ansprüche, **dadurch gekennzeichnet, daß**
der Behälter und/oder die Auffangkanne einen Deckel aufweist bzw. aufweisen, der mit einer Öffnung ausgebildet ist, und die Anzeigeeinrichtung (10) im Bereich der Öffnung bündig mit dem Deckel abschließt.

23. Vorrichtung nach einem der Ansprüche 1 bis 21, **dadurch gekennzeichnet, daß**
der Behälter und/oder die Auffangkanne einen Deckel aufweist bzw. aufweisen, der zumindest teilweise transparent ist und die Anzeigeeinrichtung (10) durch den transparenten Bereich des Deckels zumindest teilweise sichtbar ist.

24. Vorrichtung nach Anspruch 23, **dadurch gekennzeichnet, daß**
der Deckel in seinem transparenten Bereich eine Lupe umfaßt.

25. Vorrichtung nach einem der vorangehenden Ansprüche, **dadurch gekennzeichnet, daß**
alle von der Flüssigkeit benetzbaren Teile aus einem nahrungsmittelverträglichen Material ausgebildet oder mit einem nahrungsmittelverträglichen Material beschichtet sind.

26. Vorrichtung nach einem der vorangehenden Ansprüche, **dadurch gekennzeichnet, daß**
die maximale Einbauzeit und/oder die maximale Flüssigkeitsmenge einstellbar ist bzw. sind.

27. Vorrichtung nach Anspruch 26, **dadurch gekennzeichnet, daß**
zur Bestimmung des Wirkungsgrades der Flüssigkeitsbehandlungseinheit (11, 11') zumindest eine charakteristische Eigenschaft der Flüssigkeit, wie Härte, pH-Wert, Keimgehalt, Kalkgehalt, Farbe und/oder Geruch, bei der Bestimmung der maximalen Flüssigkeitsmenge und/oder der maximalen Einbauzeit berücksichtigbar ist.

28. Vorrichtung nach Anspruch 27, **dadurch gekennzeichnet, daß**
in Abhängigkeit von der Wasserhärte die maximale Flüssigkeitsmenge modifizierbar ist.

## Claims

1. A device for determining the efficiency of a liquid treatment unit for a container which at least periodically receives a liquid and which forms a funnel to the liquid treatment unit and is placed in a collecting jug, in dependence on the quantity of liquid passing through the liquid treatment unit and on the time during which the liquid treatment unit is installed in or on the container, it being possible to determine a maximum quantity of liquid and a maximum installation time, it being possible to determine the quantity of liquid passing through the liquid treatment unit in the form of a first percentage of 100% to the maximum quantity of liquid set at 0%, and the time of installation of the liquid treatment unit in or on the container in the form of a second percentage of 100% to the maximum installation time set at 0%, and it being possible to indicate the lower percentage as a result of a comparison of the first percentage with the second percentage, **characterised by**
a mounting (2, 2')
which carries at least four separate contacts (5a - 5g; 5'a - 5'e), at least three of which (5b - 5g; 5'b - 5'e) are disposed one above the other in the device and/or vertically in the container, so as to be wettable by the liquid, and which are each adapted to be electrically connected to an input of an evaluator unit respectively via a printed circuit (6a - 6g; 6'a - 6'e),
which mounting is adapted to be connected releasably to the liquid treatment unit (11, 11') and/or the container and/or the collecting jug, and
which supports the evaluator unit in operative connection to an energy source and a display device (10), wherein
in order to determine the quantity of liquid which has passed through the liquid treatment unit (11, 11') it is possible to distinguish by means of the contacts (5a - 5g; 5'a - 5'e) in conjunction with the evaluator unit, between at least three detectable filled volumes of the container, and
detected filled volumes can be totalled, and the lower percentage can be displayed via the display device (10).

2. A device according to claim 1, **characterised in that** the evaluator unit is constructed to determine the detected filled volumes over a specific period.

3. A device according to claim 1 or 2, **characterised in that** the container is pivotable about a pivot axis for the purpose of pouring prepared liquid out of the collecting jug, and each contact (5a - 5g; 5'a - 5'e) is disposed substantially parallel to and/or near the pivot axis and/or is situated in a plane containing the pivot axis.

4. A device according to any one of the preceding claims, **characterised in that** the contacts (5a - 5g; 5'a - 5'e) are adapted to be connected to the evaluator unit at least partially with the interposition of at least one resistor and/or voltage inverter.

5. A device according to any one of the preceding claims, **characterised in that** each contact (5a - 5g; 5'a - 5'e) is constructed in the form of an end of a printed circuit (6a - 6g; 6'a - 6'e), said end being bent over at least once and/or being free.

6. A device according to any one of the preceding claims, **characterised in that** the printed circuits (6a - 6g; 6'a - 6'e) are embedded at least partially in the mounting (2), are pressed on or applied to the mounting, or extend in the mounting (2').

7. A device according to any one of the preceding claims, **characterised in that** at least one printed circuit (6a - 6g; 6'a - 6'e) has a pinched end.

8. A device according to any one of the preceding claims, **characterised in that** a first contact (5a; 5'a), which is located at the lowest point in the container, acts as an earth contact, and the filled volumes can be detected via discrete filling levels in the container, said levels being determined by the provision of further contacts (5b - 5g; 5'ab - 5'e).

9. A device according to claim 8, **characterised in that** each filling level corresponds to the seat of another contact (5b - 5g; 5'b - 5'e) or is defined between two neighbouring contacts (5b - 5g; 5'b - 5'e).

10. A device according to any one of the preceding claims, **characterised in that** the filled volumes of the container are adapted to be determined by means of the liquid respectively by the short-circuiting of contacts and/or by the change of capacity of a capacitor arrangement extending vertically in the container and/or by change of the resistance of a resistance arrangement extending vertically in the container and/or by the change of frequency of an oscillator connected to two electrodes extending separately from one another in the vertical direction in a container, the electrodes and the liquid acting as a galvanic cell.

11. A device according to any one of the preceding claims, **characterised in that** the quantity of liquid that has passed through the liquid treatment unit (11, 11') is adapted to be determined in dependence on the inclination of the container.

12. A device according to claim 11, **characterised in that** the evaluator unit is active to determine filled volumes only when the container is in a substantially upright position.

13. A device according to any one of the preceding claims, **characterised in that** the display device is constructed in the form of at least one LCD or LED display (10) and/or at least one loudspeaker and/or the efficiency is indicated in at least four steps optically, such as by means of alphanumeric symbols and/or a bar display, and/or acoustically, such as by means of signal tones or speech information.

14. A device according to any one of the preceding claims, **characterised in that** an electronic clock and/or a resetting device (9) for the first and second percentage is/are respectively operatively connected to the evaluator unit or is/are integrated therein.

15. A device according to any one of the preceding claims, **characterised in that** at least one of the printed circuits (6a - 6g; 6'a - 6'e) is, at its end remote from the associated contact (5a - 5g; 5'a - 5'e), part of a fixing device for at least one plate (8), and/or
the plate (8) is a part of the evaluator unit and/or energy source.

16. A device according to any one of the preceding claims, **characterised in that** the mounting (2) is connected to the liquid treatment unit (11, 11') and/or the container and/or the collecting jug by means of a groove (3) and/or a catch (4) and/or so as to be non-rotatable.

17. A device according to any one of the preceding claims, **characterised in that** the liquid treatment unit (11, 11') is removable from or can be located in the collecting jug by way of the mounting (2, 2').

18. A device according to any one of the preceding claims, **characterised in that** the first and second percentage can be reset to 100% by the installation of a new liquid treatment unit in or on the container.

19. A device according to any one of the preceding claims, **characterised in that** the mounting (2, 2') is of flat construction, at least in zones, and/or comprises a reinforcing element (2d) to support the evaluator unit and/or has a connecting element (2a; 2'a) for connection to the liquid treatment unit (11, 11') and/or has an aerating opening (2e) for the liquid treatment unit (11, 11').

20. A device according to claim 19, **characterised in that** the smooth zone of the mounting (2) is disposed in the middle, the reinforcing element (2d) is disposed at the top end and the connecting element (2a, 2'a) is disposed at the bottom end of the mounting (2).

21. A device according to claim 19 or 20, **characterised in that** the reinforcing element (2d) is constructed as a rib and/or the connecting element (2a, 2'a) is/are constructed as a collar or an open dome.

22. A device according to any one of the preceding claims, **characterised in that** the container and/or collecting jug has/have a lid formed with an opening, and the display device (10) is flush with the lid in the region of the opening.

23. A device according to any one of claims 1 to 21, **characterised in that** the container and/or collecting jug has/have a lid which is at least partially transparent and the display device (10) is at least partially visible through the transparent zone of the lid.

24. A device according to claim 23, **characterised in that** the lid comprises a magnifier in its transparent zone.

25. A device according to any one of the preceding claims, **characterised in that** all the parts wettable by the liquid are formed from a food-compatible material or are coated with a food-compatible material.

26. A device according to any one of the preceding claims, **characterised in that** the maximum installation time and/or the maximum quantity of liquid is/are adjustable.

27. A device according to claim 26, **characterised in that** to determine the efficiency of the liquid treatment unit (11, 11') it is possible to take into account at least one characteristic property of the liquid, such as hardness, pH, bacterial content, lime content, colour and/or odour, in determining the maximum quantity of liquid and/or maximum installation time.

28. A device according to claim 27, **characterised in that** the maximum quantity of liquid can be modified depending on the water hardness.

## Revendications

1. Dispositif de détermination de l'efficacité d'une unité de traitement de liquide pour un récipient, recevant au moins par moments un liquide, constituant un entonnoir vers l'unité de traitement de liquide et placé dans un bidon de captage, en fonction de la quantité de liquide passant par l'unité de traitement de liquide et de la durée de montage de l'unité de traitement de liquide dans ou sur le récipient, une quantité de liquide maximale, ainsi qu'une durée de montage maximal étant susceptibles d'être déterminées, la quantité de liquide passée par l'unité de traitement de liquide, exprimée sous la forme d'un premier pourcentage, de 100 % jusqu'à la quantité de liquide maximale posée comme étant de 0 %, ainsi que la durée de montage de l'unité de traitement de liquide dans ou sur le récipient, exprimée sous la forme d'un deuxième pourcentage, allant de 100 % jusqu'à la durée de montage maximale posée comme étant 0 %, étant susceptibles d'être déterminées et le pourcentage le plus faible de celles-ci étant susceptible d'être affichée, en résultat d'une comparaison du premier pourcentage au deuxième pourcentage,
**caractérisé par**
une fixation (2, 2'),
portant au moins quatre contacts (5a à 5g ; 5'a à 5'e) séparés, dont au moins trois contacts (5b à 5g ; 5'b à 5'e) sont disposés les uns au-dessus des autres dans le dispositif et/ou verticalement dans le récipient, d'une façon permettant d'être mouillés par le liquide et sont susceptibles d'être reliés électriquement à une entrée d'une unité d'évaluation, chaque fois par une piste conductrice (6a à 6g ; 6'a à 6'e),
l'unité d'évaluation étant susceptible d'être reliée de façon désolidarisable à l'unité de traitement de liquide (11, 11') et/ou au récipient et/ou au bidon de captage, et
qui soutient l'unité d'évaluation, en liaison fonctionnelle avec une source d'énergie et un dispositif d'affichage (10), où,
pour déterminer la quantité de liquide passée par l'unité de traitement de liquide (11, 11'), par l'intermédiaire des contacts (5a à 5g ; 5'a à 5'e), en liaison avec l'unité d'évaluation, une distinction peut être effectuée entre au moins trois volumes de remplissage détectables du récipient, et une sommation des volumes de remplissage détectés peut être effectuée, et un affichage du pourcentage le plus faible peut être effectué, par l'intermédiaire du dispositif d'affichage (10).

2. Dispositif selon la revendication 1, **caractérisé en ce que** l'unité d'évaluation est réalisée pour former la moyenne des volumes de remplissage détectés, sur la valeur d'une durée déterminée.

3. Dispositif selon la revendication 1 ou 2, **caractérisé en ce que** le récipient servant à recevoir le liquide préparé, issu du bidon de captage, est susceptible de pouvoir pivoter autour d'un axe de pivotement, et chaque contact (5a à 5g ; 5'a à 5'e) est disposé sensiblement parallèlement et/ou à proximité de l'axe de pivotement et/ou est situé dans un plan contenant l'axe de pivotement.

4. Dispositif selon l'une des revendications précédentes, **caractérisé en ce que** les contacts (5a à 5g ; 5'a à 5'e) sont susceptibles d'être reliés à l'unité d'évaluation, au moins partiellement avec interposition d'au moins une résistance et/ou d'un inverseur de tension.

5. Dispositif selon l'une des revendications précédentes, **caractérisé en ce que** chaque contact (5a à 5g ; 5'a à 5'e) est réalisé sous la forme d'une extrémité repliée au moins une fois et/ou d'une extrémité libre d'une piste conductrice (6a à 6g ; 6'a à 6'e).

6. Dispositif selon l'une des revendications précédentes, **caractérisé en ce que** les pistes conductrices (6a à 6g ; 6'a à 6'e) sont noyées au moins partiellement dans la fixation (2), sont imprimées ou rapportées sur la fixation ou s'étendent dans la fixation (2').

7. Dispositif selon l'une des revendications précédentes, **caractérisé en ce qu'**au moins une piste conductrice (6a à 6g ; 6'a à 6'e) présente une extrémité coudée.

8. Dispositif selon l'une des revendications précédentes, **caractérisé en ce qu'**un premier contact (5a; 5'a), placé le plus profondément dans le récipient, sert de contact de masse et les volumes de remplissage sont susceptibles d'être détectés par l'intermédiaire de hauteurs de remplissage dans le récipient, discrètes, déterminées grâce à l'agencement des autres contacts (5a à 5g ; 5'a à 5'e).

9. Dispositif selon la revendication 8, **caractérisé en ce que** chaque hauteur de remplissage correspond au siège de montage d'un autre contact (5b à 5g ; 5'b à 5'e) ou est définie entre deux contacts (5b à 5g ; 5'b à 5'e) voisins.

10. Dispositif selon l'une des revendications précédentes, **caractérisé en ce que** les volumes de remplissage du récipient sont susceptibles d'être déterminés au moyen du liquide, chaque fois par mise en court-circuit de contacts et/ou par modification de la capacité électrique d'un agencement de condensateur s'étendant verticalement à l'intérieur du récipient et/ou par modification de la valeur de la résistance électrique d'un agencement résistif s'étendant verticalement dans le récipient et/ou par modification de la fréquence d'un oscillateur, relié à deux électrodes séparées l'une de l'autre, s'étendant verticalement dans un récipient, les électrodes et le liquide faisant office de cellule galvanique.

11. Dispositif selon l'une des revendications précédentes, **caractérisé en ce que** la quantité de liquide passée par l'unité de traitement de liquide (11, 11') est susceptible d'être déterminée en fonction de l'inclinaison du récipient.

12. Dispositif selon la revendication 11, **caractérisé en ce que** l'unité d'évaluation est active pour déterminer des volumes de remplissage, uniquement lorsque le récipient est en position sensiblement dressée verticalement.

13. Dispositif selon l'une des revendications précédentes, **caractérisé en ce que** le dispositif d'affichage est réalisé sous la forme d'au moins un visuel d'affichage de type LCD ou LED (10) et/ou d'au moins un haut-parleur et/ou affichant l'efficacité en au moins quatre degrés, optiquement, tel que par des caractères alphanumériques et/ou un affichage à code sonde et/ou de façon acoustique, et/ou au moyen de tonalité de signaux ou d'informations vocales.

14. Dispositif selon l'une des revendications précédentes, **caractérisé en ce qu'**une horloge électronique et/ou un dispositif de remise à l'état initial (9) est, respectivement sont, disposé(s) pour le premier et le deuxième pourcentages chaque fois en liaison fonctionnelle avec l'unité d'évaluation ou est, ou sont, intégré(s) dans cette unité d'évaluation.

15. Dispositif selon l'une des revendications précédentes, **caractérisé en ce qu'**au moins l'une des pistes conductrices (6a à 6g ; 6'a à 6'e), à son extrémité opposée au contact (5a à 5g ; 5'a à 5'e) afférent, fait partie d'un dispositif de fixation pour au moins une platine (8), et/ou la platine (8) fait partie de l'unité d'évaluation et/ou de la source d'énergie.

16. Dispositif selon l'une des revendications précédentes, **caractérisé en ce que** la fixation (2) est reliée, par l'intermédiaire d'une gorge (3) et/ou d'un ergot d'encliquetage (4) et/ou de façon assurée en rotation, à l'unité de traitement de liquide (11, 11') et/ou au récipient et/ou au bidon de captage.

17. Dispositif selon l'une des revendications précédentes, **caractérisé en ce que**, par l'intermédiaire de la fixation (2, 2'), l'unité de traitement de liquide (11, 11') est susceptible d'être enlevée du bidon de captage, ou susceptible d'être placée dans le bidon de captage.

18. Dispositif selon l'une des revendications précédentes, **caractérisé en ce que** le premier et le deuxième pourcentages peuvent être ramenés à 100 % par montage de l'unité de traitement de liquide dans ou sur le récipient.

19. Dispositif selon l'une des revendications précédentes, **caractérisé en ce que** la fixation (2, 2') est réalisée plate au moins par zones et/ou comprend pour le soutien de l'unité d'évaluation un organe de renforcement (2d) et/ou présente, pour assurer la liaison à l'unité de traitement de liquide (11, 11'), un organe de liaison (2a; 2'a) et/ou présente une ouverture d'aération (2e) pour l'unité de traitement de liquide (11, 11').

20. Dispositif selon la revendication 19, **caractérisé en ce que** la zone lisse de la fixation (2) est disposée au centre, l'organe de renforcement (2d) est disposé à l'extrémité supérieure et l'organe de liaison (2a; 2'a) est disposé à l'extrémité inférieure de la fixation (2).

21. Dispositif selon la revendication 19 ou 20, **caractérisé en ce que** l'organe de renforcement (2d) est réalisé comme, ou est, une nervure et/ou l'organe de liaison (2a; 2'a) est réalisé comme, ou est, une collerette ou une coupelle ouverte.

22. Dispositif selon l'une des revendications précédentes, **caractérisé en ce que** le récipient et/ou le bidon de captage présente, ou présentent, un couvercle réalisé avec une ouverture, et le dispositif d'affichage (10) étant délimité de façon affleurée vis-à-vis du couvercle dans la zone de l'ouverture.

23. Dispositif selon l'une des revendications 1 à 21, **caractérisé en ce que** le récipient et/ou le bidon de captage présente, ou présentent, un couvercle au moins partiellement transparent, et le dispositif d'affichage (10) est au moins partiellement visible à travers la zone transparente du couvercle.

24. Dispositif selon la revendication 23, **caractérisé en ce que** le couvercle comprend une loupe dans sa zone transparente.

25. Dispositif selon l'une des revendications précédentes, **caractérisé en ce que** toutes les parties susceptibles d'être mouillées par le liquide sont formées d'un matériau compatible avec les produits alimentaires, ou sont revêtues d'un matériau compatible avec les produits alimentaires.

26. Dispositif selon l'une des revendications précédentes, **caractérisé en ce que** la durée de montage maximale et/ou la quantité de liquide maximale est, respectivement sont, réglable(s).

27. Dispositif selon la revendication 26, **caractérisé en ce que**, pour déterminer l'efficacité de l'unité de traitement de liquide (11, 11'), au moins une propriété caractéristique du liquide, telle que la dureté, la valeur du pH, la teneur en germes, la teneur en calcaire, la couleur et/ou l'odeur, est susceptible d'être prise en considération lors de la détermination de la quantité de liquide maximale et/ou de la durée de montage maximale.

28. Dispositif selon la revendication 27, **caractérisé en ce que** la quantité de liquide maximale est modifiable en fonction de la dureté de l'eau.
